# EUROPEAN PATENT APPLICATION

(11) **EP 3 998 568 A1**
(43) Date of publication of application: **18.05.2022**
(21) Application number: 20836344.0
(22) Date of filing: 08.07.2020
(51) Int. Cl.: G06Q 30/00

(54) **TRACING-BASED PASSENGER PROTECTION METHOD AND APPARATUS, AND CHECK-IN SYSTEM**

(30) Priority: 10.07.2019 CN 201910620166
(71) Applicant: Travelsky Technology Limited, Beijing 101318 (CN)
(72) Inventor: WANG, Xiaoling, Beijing 101318 (CN); FU, Zhifeng, Beijing 101318 (CN); BI, Zheng, Beijing 101318 (CN); ZHANG, Jinwei, Beijing 101318 (CN); ZHANG, Chengjie, Beijing 101318 (CN)
(74) Representative: Detken, Andreas
(86) International application number: PCT/CN2020/100805
(87) International publication number: WO 2021/004474

(57) **Abstract**

Disclosed are a tracing-based passenger protection method and apparatus, and a check-in system. The method and the apparatus specifically relate to: determining, according to message information included in a received message, whether tracing-based protection is required; when it is determined that tracing-based protection is required, further determining whether a passenger has been subjected to class upgrade or downgrade; and if the passenger has been subjected to class downgrade or upgrade, outputting tracing-based protection scheme information, wherein the tracing-based protection scheme information comprises class upgrade tracing-based protection scheme information of a passenger who has been subjected to class downgrade and class downgrade tracing-based protection scheme information of a passenger who has been subjected to class upgrade. A passenger can be protected, when there is a corresponding change in a flight, in such a way that the passenger has a seat of their original class, thereby reducing a negative effect caused to the passenger by a flight change.

## Description

### FIELD

The present application claims priority to Chinese Patent Application No. 201910620166.6, titled "TRACING-BASED PASSENGER PROTECTION METHOD AND APPARATUS, AND CHECK-IN SYSTEM", filed on July 10, 2019 with the China National Intellectual Property Administration, which is incorporated herein by reference in its entirety.

### BACKGROUND

When planned or unplanned changes of flights occur, an aircraft cabin may inevitably change. If the passenger is reassigned to the same class of the cabin as the original class, the impact on the passenger is small. However, class downgrade or upgrade will have a great impact on the passenger. Therefore, when a flight plan changes, a passenger protection is necessary to output end-to-end passenger protection scheme information by a check-in system of the airline, thereby reducing negative impact on the passenger when the flight changes.

### SUMMARY

In view of the above, an information transmission method and apparatus are provided according to the embodiments of the present disclosure, to solve the problem of low security of the conventional information transmission method for transmitting information between an electronic device and a user terminal.

In order to realize the above objectives, the following technical solutions are provided according to the embodiments of the present disclosure.

A tracing-based passenger protection method is provided, which is applied to a check-in system. The method includes:
receiving a message, and determining whether a tracing-based protection is to be performed based on message information in the message;
determining whether a passenger has been downgraded or upgraded, in response to a determination that the tracing-based protection is to be performed; and
outputting tracing-based protection scheme information in a case that the passenger has been downgraded or upgraded, where the tracing-based protection scheme information includes upgrade tracing-based protection scheme information for a downgraded passenger and downgrade tracing-based protection scheme information for an upgraded passenger.

In an embodiment, a type of the tracing-based protection includes a flight cancellation type, an aircraft model change type and a secondary protection type.

In an embodiment, the outputting tracing-based protection scheme information includes: preferentially outputting the upgrade tracing-based protection scheme information in a case that the passenger has been downgraded.

In an embodiment, the outputting tracing-based protection scheme information includes: outputting the tracing-based protection scheme information preferentially for a high-worth passenger in a case that tracing-based protection is to be performed for multiple passengers.

A tracing-based passenger protection apparatus is provided, which is applied to a check-in system. The apparatus includes a first determination module, a second determination module and an information output module.

The first determination module is configured to receive a message, and determine whether tracing-based protection is to be performed based on message information in the message.

The second determination module is configured to determine whether a passenger has been downgraded or upgraded, in response to a determination that the tracing-based protection is to be performed.

The information output module is configured to output tracing-based protection scheme information in a case that the passenger has been downgraded or upgraded, where the tracing-based protection scheme information includes upgrade tracing-based protection scheme information for a downgraded passenger and downgrade tracing-based protection scheme information for an upgraded passenger.

In an embodiment, a type of the tracing-based protection includes a flight cancellation type, an aircraft model change type and a secondary protection type.

In an embodiment, the information output module includes a first output unit configured to preferentially output the upgrade tracing-based protection scheme information in a case that the passenger has been downgraded.

In an embodiment, the information output module includes a second output unit configured to output the tracing-based protection scheme information preferentially for a high -worth passenger in a case that tracing-based protection is to be performed for multiple passengers.

A check-in system is provided. The check-in system includes the tracing-based passenger protection apparatus described above.

In the above technical solutions, a tracing-based passenger protection method and apparatus, and a check-in system are provided according to the present disclosure. The method includes: determining whether tracing-based protection is to be performed, based on message information in a received message; determining whether a passenger has been upgraded or downgraded, in response to a determination that the tracing-based protection is to be performed; and outputting tracing-based protection scheme information in a case that the passenger has been downgraded or upgraded, where the tracing-based protection scheme information includes upgrade tracing-based protection scheme information for a downgraded passenger and downgrade tracing-based protection scheme information for an upgraded passenger. With the above technical solutions, the passenger is protected, so as to allocate an original class for the passenger when the flight is changed, thereby reducing the negative impact on the passenger when the flight changes.

### BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the provided drawings without any creative effort.
Figure 1 is a flowchart of a tracing-based passenger protection method according to an embodiment of the present disclosure; and
Figure 2 is a block diagram of a tracing-based passenger protection apparatus according to an embodiment of the present disclosure.

### DETAILED DESCRIPTION OF EMBODIMENTS

Technical solutions of embodiments of the present disclosure are described below in conjunction with the drawings of the embodiments of the present disclosure. Apparently, the embodiments described below are only some embodiments of the present disclosure, rather than all the embodiments. Any other embodiments obtained by those skilled in the art based on the embodiments in the present disclosure without any creative effort fall within the protection scope of the present disclosure.

A flight refers to an aircraft, which is any scheduled flight engaged in public transport of passengers, mails or goods. The flight also refers to a passenger ship or a passenger plane of a certain flight, or a flight of a passenger ship or a passenger plane.

A flight is represented by a combination of a two-word code representing an airline and four digits. Codes for airlines are stipulated and published by the Civil Aviation Administration. A first digit among the four digits indicates an area where a base of the airline is located. A second digit among the four digits indicates an area where a destination outside the base of the flight is located (1 represents North China, 2 represents Northwest China, 3 represents South China, 4 represents Southwest China, 5 represents East China, 6 represents North China, 8 represents Xiamen and 9 represents Xinjiang). A third digit and a fourth digit among the four digits indicate a serial number of the flight. An odd number indicates an outbound flight from the base, and an even number indicates a return flight back to the base.

### Basic classification

[1] Flights may be classified into scheduled flights and irregular flights.

The scheduled flight refers to a flight which flies from a departure station regularly to a terminal directly or by passing through a stopover station, according to a specified route.

### The flight is at an airport

### The flight is at an airport (three photos)

A flight flying on an international route is referred to as an international flight, and a flight flying on a domestic route is referred to as a domestic flight.

[2] Flights may be classified into outbound flights and return flights.

The classification of flights is described above. In addition, there are some special flights, for example, "sun chasing" flights.

### [Introduction to sun chasing flights]

Total solar eclipse, when is viewed on aircrafts, will not be disturbed by air pollution and clouds, and can be viewed in a short distance and for a long time. Many astrophiles pursue this astronomical spectacle on flight. For example, a solar eclipse appears on July 22, 2009. In order to view the solar eclipse, passengers took morning flights from Chengdu to Shanghai, Wuxi and other places. These flights are referred to as "sun chasing" flights.

Whether the total solar eclipse can be viewed on an aircraft depends on many factors such as an altitude and a fleet angle of the aircraft. Even if the passenger takes a "sun chasing" flight from west to east, the passenger may not always view the total solar eclipse. "If the aircraft flies towards the sun, the passenger cannot see the sun." Wang Sichao, a researcher at Zijinshan observatory of the Chinese Academy of Sciences, said that when the total solar eclipse occurs, a lunar shadow moves from west to east at a speed about 1 km per second, while the civil aircraft flies generally at a speed of 800 km per hour. Therefore, it is impossible to catch up with the "foot steps" of the total solar eclipse by plane. However, Wang Sichao pointed out that on the aircraft, a time period for observing total solar eclipse is prolonged. "If an original time period for observation is 5 minutes, the time period for observation is extended to 7 or 8 minutes on the aircraft."

### Related information

There are three main flight modes in civil aviation transportation, which are a scheduled flight, an extra section flight and a chartered flight.
[1] The scheduled flight refers to a flight with a fixed aircraft type, a fixed date and a fixed time instant according to a schedule and a specified route.
[2] The extra section flight refers to an additional flight in addition to the scheduled flight according to temporary needs.
[3] The chartered flight refers to a special flight on an existing route or on a route except the existing route according to requirements of a charter enterprise.

### In addition, there are irregular flights and seasonal flights.

Classes of a flight are represented by: FACDYSBHKLMNQTXUEWROZVG. F represents a full-fare first class ticket. A represents a first class free ticket for frequent flyers. C represents a full-fare business class ticket. D represents a business class free ticket for frequent flyers. Y represents a full-fare economy class ticket. S represents a special class ticket such as an interline ticket and a gap class ticket. B represents 10% off of the economy class ticket. H represents 15% off of the economy class ticket. K represents 20% off of the economy class ticket. L represents 25% off of the economy class ticket. M represents 30% off of the economy class ticket. N represents 35% off of the economy class ticket. Q represents 40% off of the economy class ticket (passengers in this class include teachers, medical staff and model workers at or above the county level). T represents 45% off of the economy class ticket. X represents 50% of the economy class ticket (passengers in this class include students and elders (Chinese mainland citizens over 55 years old)). U represents 55% off of the economy class ticket. E represents 60% off of the economy class ticket. W represents 65% off of the economy class ticket. R represents 70% off of the economy class ticket. O represents 75% off of the economy class ticket. Z represents a code sharing reserved special class ticket. V represents a special class ticket for frequent flyers (reservation by Air China's bosom friend card passengers). G represents an economy class free ticket for frequent flyers.

### Flights in China have the following problems in passenger protection.

Flight delay is a pain point for airlines, and brings a feeling of helplessness to passengers. Due to the lack of the concept of rights and obligations and the concept of free market competition, there are legal deficiencies in the protection of rights of passengers in China's civil aviation laws and regulations. Looking at the whole civil aviation law and relevant laws and regulations, the deficiencies are as follows.

### 1. No clear definition of flight delay

The definition of flight delay is a first problem to be solved before compensation due to flight delay. If the flight delay is not clearly defined, a possible contradiction between airlines and passengers may occur due to the flight delay. In fact, what is flight delay is an outstanding problem in the practice of air transportation. For example, is the flight delay referred to as a delay as long as a time instant specified on the ticket is violated, or a delay after a certain grace time, or a delay as long as passengers wait for departure in the cabin? According to civil aviation professionals, when passengers are allowed to board as soon as possible and the cabin door is closed on time, even if the aircraft wait at the apron or the runway for a long time, the delay cannot be attributed to the air carrier. In this case, the air carrier can be exempted from the obligation of compensation. At present, in China's relevant laws, regulations and provisions, the definition of flight delay is general, which is not specific and clear. In case of flight delay, the air carrier will avoid liability in various ways. For example, the air carrier allows passengers to board first to avoid the liability for compensation caused by the flight delay.

### 2. No clear definition of legal liability caused by flight delay

Since air transportation is greatly affected by objective factors such as weather, delay is generally divided into reasonable delay and unreasonable delay according to international practice. A flight delay caused by reasons uncontrolled by air carriers such as typhoons and military activities is referred to as a reasonable delay. A delay caused by causes that can be foreseen and avoided by the airline, such as air material allocation, mechanical maintenance, flight task overtime, aviation fuel supply, aircraft allocation, aircraft supply, is referred to as an unreasonable delay. It is unfair to impose responsibility on the air carrier without distinguishing between the two situations. At present, there is no clear distinction between reasonable delay and unreasonable delay in China's law. Thus, there is no clear definition of the responsibility sharing of flight delay in the two situations. In judicial practice, whether a delay is the reasonable delay or the unreasonable delay is determined according to discretion of the judge. After a flight is delayed, the air carrier usually directly explains the delay as the reasonable delay and claims exemption, while passengers cannot distinguish between the reasonable delay and the unreasonable delay, and don't know their rights and obligations in two different situations. The passengers blindly believe that they should get compensation as long as the aircraft didn't take off on time.

### 3. Legal conflict in imputation principle of flight delay

The imputation principle refers to the legal criterion to determine whether the defaulting party should bear the liability for breach of contract based on certain imputation reasons. The determination of the imputation principle directly determines the constituent elements of the liability for breach of contract in air transportation, the distribution of the burden of proof of passengers, the reasons for exemption of the air carrier and the like. From Warsaw Convention to Montreal Convention, the imputation principle of presumption of fault liability is adopted for the air carrier. That is, in case of flight delay, as long as the air carrier proves that necessary measures has been implemented, the air carrier is not required to bear liability. Due to the late start of China's civil aviation law, China's current civil aviation law is formulated with reference to the above two conventions, and the presumption of fault liability is also applicable to the legal liability for flight delay. However, the main imputation principle of Contract Law is the principle of no fault. In the specific provisions of the contract of carriage, the carrier's presumption of fault liability is only stipulated for the damage and loss of articles of passengers. Therefore, if the Contract Law is applied, the principle of no fault liability should be applied to the flight delay, which has a serious legal conflict with the provisions of the civil aviation law.

In daily life, purposes of passengers taking flights are different, and the purposes include travel, business negotiation and contract signing. The author analyzes a case in which business opportunities is delayed by the flight delay. The business opportunity delayed by the flight delay may also be referred to as a loss of passengers' expectable interests caused by the flight delay. The expected interests may be understood as profitable business opportunities. From the provisions of the Contract Law, "predictability" should be based on general social common sense as the standard of foresight, and the standard of "predictability" limits the arbitrary expansion of the scope of compensation to a certain extent. Airlines only serve as carriers in air transportation, and cannot predict whether a particular passenger has lost profitable business opportunities.

Therefore, the following technical solutions are provided according to the present disclosure to protect passengers.

### First Embodiment

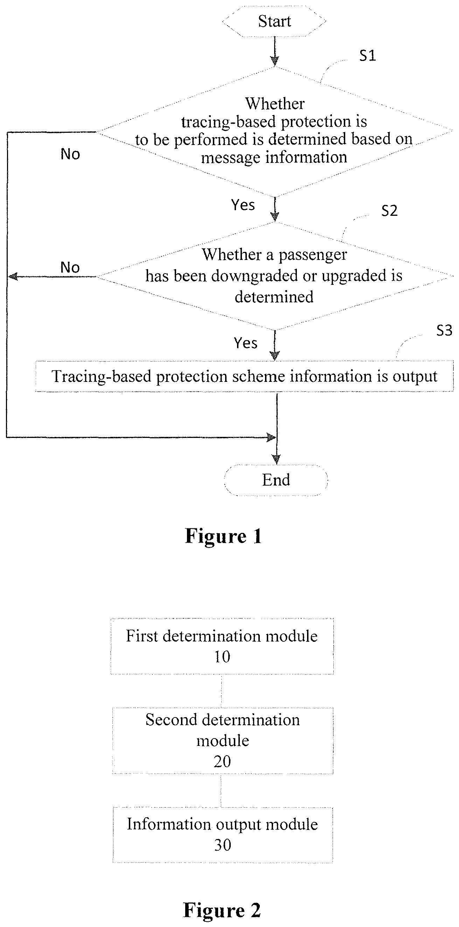

Figure 1 is a flowchart of a tracing-based passenger protection method according to an embodiment of the present disclosure.

As shown in Figure 1, the tracing-based passenger protection method according to this embodiment is applied to a check-in system of an aviation enterprise or an airport to provide passengers with passenger protection scheme information, so that the passengers are protected. The tracing-based passenger protection method includes the following steps S1 to S3.

In step S1, whether tracing-based protection is to be performed is determined based on message information.

In an embodiment, a message is received from an upper computer or other information providing system. The message includes the message information. After the message is received, whether tracing-based protection is required to be performed is determined based on the message information in the message. If the tracing-based protection is not required to be performed, the process is ended.

In addition, the received message is the basis for determining whether to perform tracing-based protection. The following scenarios trigger this determination.

1. A scenario in which an aircraft model for a flight changes and the number of sales increases

The scenario in which the aircraft model for the flight changes and the number of sales increases, for example, a scenario in which the aircraft model changes from Boeing 320 to Boeing 737 and the number of layout changes from F20W10Y300 to F50W20Y320, will trigger the determination of whether to start tracing-based protection.

### 2. A scenario in which an aircraft model for a flight changes and the number of classes changes

The scenario in which the aircraft model for the flight changes and the number of classes changes, for example, a scenario in which aircraft model changes from two classes to three classes or changes from FJY to FWY, will trigger the determination of whether to start tracing-based protection.

### 3. A scenario of secondary protection

A scenario, in which an abnormal change of a current flight result in a passenger being protected to other flight or the original flight and the airline plans to perform secondary protection on the current flight, will trigger the determination of whether to start tracing-based protection.

The type of tracing-based protection includes a flight cancellation type, a simple aircraft model change type and a secondary protection type.

For the flight cancellation type, before this aircraft model change, flight is cancelled, and thus a passenger is upgraded or downgraded; in this case, there is a class the same as an original class, which can be traced back by the passenger in this aircraft model change.

For the simple aircraft model change type, before this aircraft model change, one or more aircraft model changes result in a passenger being upgraded or downgraded, and there is a class the same as an original class, which can be traced back by the passenger to trace back to in this aircraft model change.

For the secondary protection type, a first protection for this flight results in some passengers being upgraded or downgraded. A target flight in a current protection is the original flight and there is a class the same as an original class, which can be traced back by the passenger.

In step S2, it is determined whether a passenger has been downgraded or upgraded.

When the tracing-based protection is determined to be performed based on the message information, it is further determined whether the passenger has been downgraded or upgraded. When related information meets a predetermined condition, it is determined that the passenger has been downgraded or upgraded. Specifically, the condition includes the following cases:
a case that when the aircraft model change results in a change in classes of the flight or an increase of the number of sales, a passenger has been downgraded in the flight subjected to aircraft model change and there is a class the same as an original class of the passenger on the flight;
a case that when the aircraft model change results in a change in classes of the flight or an increase of the number of sales, a passenger has been upgraded in the flight subjected to aircraft model change and there is a class the same as an original class of the passenger on the flight; and
a case that the flight is changed to perform a secondary protection, a passenger has involuntarily been upgraded in the first protection, the target flight is the original flight (only when the target flight in the secondary protection is the original flight, the determining whether a passenger has been downgraded or upgraded will be performed), and there is a class the same as an original class which can be traced back by the passenger.

In step S3, tracing-based protection scheme information is outputted.

According to the above determination, in the case that a passenger has been upgraded or downgraded and one of the above conditions is met, the tracing-based protection scheme information is output for the passenger, so that the passenger is allocated the original class.

The tracing-based protection scheme information includes downgrade tracing-based protection scheme information for an upgraded passenger and upgrade tracing-based protection scheme information for a downgraded passenger.

In implementation, the upgrade tracing-based protection scheme information is outputted preferentially to the downgraded passenger, so that the downgraded passenger is allocated an original high class. The number of seats in the high class is small, and thus most of the downgraded passengers are high-class passengers, which are important protection object for airlines. Preferential tracing-based protection for the downgraded passengers is conducive to improving satisfaction of travel experience of the passengers.

In addition, when tracing-based protection is required for multiple passengers, the tracing-based protection scheme information is outputted preferentially for a high-worth passenger.

In the above technical solutions, a tracing-based passenger protection method is provided according to the present disclosure. The method is applied to a check-in system. The method includes: determining whether tracing-based protection is to be performed, based on message information in a received message; determining whether a passenger has been upgraded or downgraded, in response to a determination that the tracing-based protection is to be performed; and outputting tracing-based protection scheme information in a case that the passenger has been downgraded or upgraded, where the tracing-based protection scheme information includes upgrade tracing-based protection scheme information for a downgraded passenger and downgrade tracing-based protection scheme information for an upgraded passenger. With the above technical solutions, the passenger is protected, so as to allocate an original class for the passenger when the flight is changed, thereby reducing the negative impact on the passenger when the flight changes.

For protection forms, there are some different implementations for different scenarios. Implementations of the tracing-based protection are briefly described by taking a tracing-based protection scheme of a domestic airline as an example. In the example, the original class is an initial scheduled sub class. The tracing-based protection scheme includes the following steps.

In step (1), it is determined whether to start tracing-based protection.

After a message is received, it is determined whether an aircraft model change is an EQT aircraft model change.

Result I: the flight change is not the EQT aircraft model change.

The tracing-based protection is not started and the following steps are continued to be performed.

Result II: the aircraft model change is the EQT aircraft model change.

A category of the aircraft model change is determined.

In a category A, an original flight is changed to other flight.

The tracing-based protection is not started and the following steps are continued to be performed.

In a category B, an original flight is changed to the current flight.

The tracing-based protection is started, and it is checked whether each passenger on this flight has been subjected to EQT aircraft model change/CNL flight cancellation.
a) If no aircraft model change/flight cancellation is found in a history library, the tracing-based protection is not started and the following steps are continued to be performed.
b) If aircraft model change/flight cancellation is found in the history library, it is determined whether an original class for the passenger is consistent with a current class for the passenger after this aircraft model change.

In a case 1, the original class for the passenger is consistent with the current class for the passenger after this aircraft model change.

In this case, the tracing-based protection is not started.

In a case 2, the original class for the passenger is not consistent with the current class for the passenger after this aircraft model change.
i. If the original class is higher than the current class, upgrade tracing-based protection is performed.
ii. If the original class is lower than the current class, downgrade tracing-based protection is performed.

In step (2), upgrade tracing-based protection is performed.

If the original class for the passenger is higher than the current class, it is required to determine whether there is the class the same as the original class in this aircraft model change.
I. If there is not the class the same as the original class in this aircraft model change, the tracing-based protection is not performed and the following steps are continued to be performed.
II. If there is the class the same as the original class in this aircraft model change, it is determined whether the number of BKG of the class is greater than or equal to the number of MAX of the class.

A. If the number of BKG is greater than or equal to the number of MAX, the tracing-based protection is not performed and the following steps are continued to be performed.

B. If the number of BKG is greater than or equal to the number of MAX, the tracing-based protection is performed and the passenger is allocated the original class.

In step (3), downgrade tracing-based protection is performed.

If the original class for the passenger is lower than the current class, it is required to determine whether there is the class the same as original class in this aircraft model change.
I. If there is not the class the same as the original class in this aircraft model change, the tracing-based protection is not performed and the following steps are continued to be performed.
II. If there is the class the same as the original class in this aircraft model change, it is determined whether the number of BKG of the class is greater than or equal to the number of MAX of the class.

A. If the number of BKG is greater than or equal to the number of MAX, the tracing-based protection is not performed and the following steps are continued to be performed.

B. If the number of BKG is greater than or equal to the number of MAX, the tracing-based protection is performed and the passenger is allocated the original class.

### Second embodiment

Figure 2 is a block diagram of a tracing-based passenger protection apparatus according to an embodiment of the present disclosure.

As shown in Figure 2, the tracing-based passenger protection apparatus according to this embodiment is applied to a check-in system of an aviation enterprise or an airport to provide passengers with passenger protection scheme information, so that the passengers are protected. The tracing-based passenger protection apparatus includes a first determination module 10, a second determination module 20 and an information output module 30.

The first determination module is configured to determine whether tracing-based protection is to be performed based on message information.

In an embodiment, a message is received from an upper computer or other information providing system. The message includes the message information. After the message is received, whether tracing-based protection is required to be performed is determined based on the message information in the message. If the tracing-based protection is not required to be performed, the process is ended.

In addition, the received message is the basis for determining whether to perform tracing-based protection. The following scenarios trigger this determination.

### 4. A scenario in which an aircraft model for a flight changes and the number of sales increases

The scenario in which the aircraft model for the flight changes and the number of sales increases, for example, a scenario in which the aircraft model changes from Boeing 320 to Boeing 737 and the number of layout changes from F20W10Y300 to F50W20Y320, will trigger the determination of whether to start tracing-based protection.

5. A scenario in which an aircraft model for a flight changes and the number of classes changes

The scenario in which the aircraft model for the flight changes and the number of classes changes, for example, a scenario in which aircraft model changes from two classes to three classes or changes from FJY to FWY, will trigger the determination of whether to start tracing-based protection.

### 6. A scenario of secondary protection

A scenario, in which an abnormal change of a current flight result in a passenger being protected to other flight or the original flight and the airline plans to perform secondary protection on the current flight, will trigger the determination of whether to start tracing-based protection.

The type of tracing-based protection includes a flight cancellation type, a simple aircraft model change type and a secondary protection type.

For the flight cancellation type, before this aircraft model change, flight is cancelled and thus a passenger is upgraded or downgraded; in this case, there is a class the same as an original class, which can be traced back by the passenger in this aircraft model change.

For the simple aircraft model change type, before this aircraft model change, one or more aircraft model changes result in a passenger being upgraded or downgraded, and there is a class the same as an original class, which can be traced back by the passenger in this aircraft model change.

For the secondary protection type, a first protection for this flight results in some passengers being upgraded or downgraded. A target flight in a current protection is the original flight and there is a class the same as an original class, which can be traced back by the passenger.

The second determination module is configured to determine whether a passenger has been downgraded or upgraded.

When the tracing-based protection is determined to be performed based on the message information, it is further determined whether the passenger has been downgraded or upgraded. When related information meets a predetermined condition, it is determined that the passenger has been downgraded or upgraded. Specifically, the condition includes the following cases:
a case that when the aircraft model change results in a change in classes of the flight or an increase of the number of sales, a passenger has been downgraded in the flight subjected to aircraft model change and there is a class the same as an original class of the passenger on the flight;
a case that when the aircraft model change results in a change in classes of the flight or an increase of the number of sales, a passenger has been upgrade in the flight subjected to aircraft model change and there is a class the same as an original class of the passenger on the flight; and
a case that the flight is changed to perform a secondary protection, a passenger has involuntarily be upgraded in the secondary protection, the target flight is the original flight (only when the target flight in the secondary protection is the original flight, the determining whether a passenger has been downgraded or upgraded will be performed), and there is a class the same as an original class which can be traced back by the passenger.

The information output module is configured to output tracing-based protection scheme information if the passenger has been downgraded or upgraded.

According to the above determination, in the case that a passenger has been upgraded or downgraded and one of the above conditions is met, the tracing-based protection scheme information is output for the passenger, so that the passenger is allocated the original class.

The tracing-based protection scheme information includes downgrade tracing-based protection scheme information for an upgraded passenger and upgrade tracing-based protection scheme information for a downgraded passenger. The information output module includes a first output unit and a second output unit.

The first output unit preferentially outputs the upgrade tracing-based protection scheme information to the downgraded passenger, so that the downgraded passenger is allocated an original high class. The number of seats in the high class is small, and thus most of the downgraded passengers are high-class passengers, which are important protection object for airlines. Preferential tracing-based protection for the downgraded passengers is conducive to improving satisfaction of travel experience of the passengers.

In addition, when tracing-based protection is required for multiple passengers, the second output unit preferentially outputs the tracing-based protection scheme information for a high- worth passenger.

In the above technical solutions, a tracing-based passenger protection apparatus is provided according to the present disclosure. The apparatus is applied to a check-in system. The apparatus is configured to: determine whether tracing-based protection is to be performed, based on message information in a received message; determine whether a passenger has been upgraded or downgraded, in response to a determination that the tracing-based protection is to be performed; and output tracing-based protection scheme information in a case that the passenger has been downgraded or upgraded, where the tracing-based protection scheme information includes upgrade tracing-based protection scheme information for a downgraded passenger and downgrade tracing-based protection scheme information for an upgraded passenger. With the above technical solutions, the passenger is protected, so as to allocate an original class for the passenger when the flight is changed, thereby reducing the negative impact on the passenger when the flight changes.

### Third Embodiment

A check-in system is provided according to this embodiment. The check-in system may be regarded as a computer hardware system or a software system. In an embodiment, the check-in system may be regarded as a computer program running on a mobile network, such as an app on an intelligent mobile device. The check-in system is provided with the tracing-based passenger protection apparatus according to the above embodiment.

The tracing-based passenger protection apparatus is configured to: determine whether tracing-based protection is to be performed, based on message information in a received message; determine whether a passenger has been upgraded or downgraded, in response to a determination that the tracing-based protection is to be performed; and output tracing-based protection scheme information in a case that the passenger has been downgraded or upgraded, where the tracing-based protection scheme information includes upgrade tracing-based protection scheme information for a downgraded passenger and downgrade tracing-based protection scheme information for an upgraded passenger. With the above technical solutions, the passenger is protected, so as to allocate an original class for the passenger when the flight is changed, thereby reducing the negative impact on the passenger when the flight changes.

The embodiments in this specification are described in a progressive way, each of which emphasizes the differences from others. For the same or similar parts among the embodiments, one may refer to description of other embodiments.

Those skilled in the art should understand that the embodiments of the present disclosure may be provided as a method, an apparatus, or a computer program product. Therefore, the embodiments of the present disclosure may be implemented in form of full hardware embodiments, full software embodiments, or embodiments combining software and hardware. Further, the embodiments of the present disclosure may be implemented in a form of a computer program product implemented on one or more computer usable storage media (including but not limited to a disk memory, a CD-ROM, an optical memory and the like) including computer executable program codes.

The embodiments of the present disclosure are described with reference to flowcharts and/or block diagrams of the method, the terminal device (the system) and the computer program product according to the embodiments of the present disclosure. It should be understood that each process and/or block in the flowcharts and/or block diagrams and a combination of a process and/or a block in the flowcharts and/or the block diagrams may be implemented by computer program instructions. The computer program instructions may be provided to a processor of a general computer, a special computer, an embedded processor or other programmable data processing terminal device to generate a machine, so that instructions executed by the processor of the computer or other programmable data processing terminal device generates an apparatus for realizing functions specified in one or more processes in the flowcharts and/or one or more blocks in the block diagrams.

The computer program instructions may also be stored in a computer-readable memory capable of guiding a computer or other programmable data processing terminal device to operate in a specific manner, so that instructions stored in the computer-readable memory generate a manufacturing product including an instruction apparatus. The instruction apparatus implements the functions specified in one or more processes in the flowcharts and/or one or more blocks in the block diagrams.

The computer program instructions may also be loaded on a computer or other programmable data processing terminal device, so that a series of operation steps are performed on the computer or other programmable terminal device to produce computer implemented processing. Thus, instructions executed on the computer or other programmable terminal device provide steps for implementing the functions specified in one or more processes in the flowcharts and/or one or more blocks in the block diagrams.

Although preferred embodiments of the present disclosure are described, those skilled in the art may make variations and modifications to these embodiments once they know basic inventive concept. Therefore, the claims are intended to be interpreted as including preferred embodiments and all variations and modifications falling within the scope of embodiments of the present disclosure.

It should be noted that in the present disclosure, relationship terms such as "first" and "second" are merely for distinguishing one entity or operation from another entity or operation rather than indicating or implying an actual relationship or order between these entities or operations. In addition, terms of "include", "comprise" or any other variants are intended to be non-exclusive. Therefore, a process, method, article or terminal device including a series of elements includes not only the elements but also other elements that are not enumerated, or also include elements inherent in the process, method, article or terminal device. Unless expressively limited otherwise, the statement "comprising (including) one..." does not exclude a case that other similar elements may exist in the process, method, article or terminal device.

The technical solutions according to the present disclosure are described in detail above. In this specification, examples are used to explain the principle and embodiments of the present disclosure. The above description of the embodiments is only used to help understand the method and the core idea of the present disclosure. Those skilled in the art may make variations to the embodiments and the application scope based on the idea of the present disclosure. In conclusion, the contents of the specification should not be understood as limitation to the present disclosure.

## Claims

1. A tracing-based passenger protection method, applied to a check-in system, wherein the tracing-based passenger protection method comprises:
receiving a message, and determining whether tracing-based protection is to be performed based on message information in the message;
determining whether a passenger has been downgraded or upgraded, in response to a determination that the tracing-based protection is to be performed; and
outputting tracing-based protection scheme information in a case that the passenger has been downgraded or upgraded, wherein the tracing-based protection scheme information comprises upgrade tracing-based protection scheme information for a downgraded passenger and downgrade tracing-based protection scheme information for an upgraded passenger.

2. The tracing-based passenger protection method according to claim 1, wherein a type of the tracing-based protection comprises a flight cancellation type, an aircraft model change type and a secondary protection type.

3. The tracing-based passenger protection method according to claim 1, wherein the outputting tracing-based protection scheme information comprises:
preferentially outputting the upgrade tracing-based protection scheme information in a case that the passenger has been downgraded.

4. The tracing-based passenger protection method according to claim 1, wherein the outputting tracing-based protection scheme information comprises:
outputting the tracing-based protection scheme information preferentially for a high-worth passenger in a case that tracing-based protection is to be performed for a plurality of passengers.

5. A tracing-based passenger protection apparatus, applied to a check-in system, wherein the apparatus comprises:
a first determination module configured to receive a message, and determine whether tracing-based protection is to be performed based on message information in the message;
a second determination module configured to determine whether a passenger has been downgraded or upgraded, in response to a determination that the tracing-based protection is to be performed; and
an information output module configured to output tracing-based protection scheme information in a case that the passenger has been downgraded or upgraded, wherein the tracing-based protection scheme information comprises upgrade tracing-based protection scheme information for a downgraded passenger and downgrade tracing-based protection scheme information for an upgraded passenger.

6. The tracing-based passenger protection apparatus according claim 5, wherein a type of the tracing-based protection comprise a flight cancellation type, an aircraft model change type and a secondary protection type.

7. The tracing-based passenger protection apparatus according claim 5, wherein the information output module comprises:
a first output unit configured to preferentially output the upgrade tracing-based protection scheme information in a case that the passenger has been downgraded.

8. The tracing-based passenger protection apparatus according claim 5, wherein the information output module comprises:
a second output unit configured to output the tracing-based protection scheme information preferentially for a high-worth passenger in a case that tracing-based protection is to be performed for a plurality of passengers.

9. A check-in system, comprising the tracing-based passenger protection apparatus according any one of claims 5 to 8.
